# EUROPÄISCHE PATENTSCHRIFT

(11) **EP 0 657 674 B1**
(45) Veröffentlichungstag und Bekanntmachung des Hinweises auf die Patenterteilung: **21.03.2001**
(21) Anmeldenummer: 94202849.9
(22) Anmeldetag: 03.10.1994
(51) Int. Cl.: F16L 29/04

(54) **Kupplung für tiefkalte verflüssigte Medien**
Coupling for liquified products at low temperatures
Accouplement pour produits liquifiés à basses températures

(30) Priorität: 22.11.1993 DE 4339676
(43) Veröffentlichungstag der Anmeldung: 14.06.1995
(73) Patentinhaber: MESSER GRIESHEIM GMBH, 60547 Frankfurt (DE)
(72) Erfinder: Hettinger, Wolfgang, D-50769 Köln (DE); Ricken, Norbert, D-44797 Bochum (DE); Kleinebeckel, Harald, D-50735 Köln (DE)

(56) Entgegenhaltungen:
- EP-A- 0 085 010
- EP-A- 0 477 949
- WO-A-88/08499
- DE-A- 3 409 694
- DE-A- 4 041 337

## Beschreibung

Die Erfindung betrifft eine Kupplung für tiefkalte verflüssigte Medien zum Verbinden zweier Leitungsenden nach dem Oberbegriff des Anspruches 1.

Kupplungen zum Verbinden zweier Leitungen sind bekannt (DE 3409694 A1). Werden diese Kupplungen für das Befüllen von Kryobehältern eingesetzt, treten beim Durchfluß der Kryoflüssigkeiten außen Vereisungen auf, die unerwünscht sind und dazu führen können, daß die Kupplungsstücke nicht mehr voneinander getrennt werden können. Dieses Problem tritt auch dann auf, wenn es beim Herstellen der Verbindung der Leitungsenden zum Lufteinschluß kommt und die in der Luft enthaltene Feuchtigkeit als Kondensat an den tiefkalten Kupplungsteilen gefriert. Es ist dann erforderlich, die Umfüllvorrichtung warm zu fahren, damit die Kupplung gelöst werden kann, ohne daß Feuchtigkeit in der Umfüllvorrichtung kondensieren kann. Hinzu kommt, daß beim Eindringen von Umgebungsluft in die Umfüllvorrichtung sich ein explosives Gemisch z.B. bei Wasserstoff oder Erdgas, bilden kann, so daß diese vor Gebrauch mit einem Inertgas gespült werden muß. Des weiteren kann bei Helium oder Wasserstoff aufgrund der niedrigen Siedetemperaturen restlicher Sauerstoff oder Stickstoff, der in der Umfüllvorrichtung ist, ausgefrieren, was zu einem Versagen von Bauteilen, wie Magnetventilen, führen kann.

Aus der DE-A-40 41 337 A1 ist bereits eine Kupplung für Flüssiggase bekannt, bei der das Eindringen von Umgebungsluft vermieden werden soll, indem vor dem eigentlichen Betankungsvorgang durch entsprechende Schaltung eines Ventils über ein Spülmedium das Umgebungsmedium entfernt wird.

Die beim Warmfahren und/oder Spülen der Umfüllvorrichtung benötigte Zeit.ist dabei wesentlich länger als die eigentliche Betankungszeit des Kryotanks mit einer Kryoflüssigkeit. Eine Kupplung zum Erleichtern und Beschleunigen des Betankungsvorganges, z.B. von Wasserstofftanks für Fahrzeuge, ist daher wünschenswert.

Der Erfindung liegt daher die Aufgabe zugrunde, eine Kupplung für tiefkalte Medien zu schaffen, die im tiefkalten Zustand gelöst werden kann und mit der die Befüllzeit von Kryobehältern verringert wird.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Die erfindungsgemäße Kupplung vermeidet beim Durchfluß von tiefkalten Medien, wie z.B. flüssig-Wasserstoff (LH₂), im Inneren außen eine Vereisung durch eine Überlappung von Vakuumräumen im zusammengesteckten Zustand. Im Inneren dieser Vakuumräume ist auf beiden Kupplungsstücken je ein Absperrventil am Ende der Leitungen angeordnet, die die Leitungen im entkuppelten Zustand verschließen. Werden die beiden Kupplungsstücke zusammengeschoben, so erfolgt als erstes das Abdichten der beiden Absperrventile gegeneinander nach außen nahezu ohne Lufteinschluß. Erst wenn die Kupplungsstücke weiter zusammengeschoben werden, öffnen sich die Absperrventile und geben den Durchgang für das tiefkalte Medium frei. Im Bereich der Kupplung vorhandene Umgebungsluft wird beim Kuppeln weitestgehend durch das Volumen des eindringenden Kupplungsstückes verdrängt, so daß ein Inertisieren beziehungsweise Spülen der Kupplung entfällt.

Die Erfindung sowie weitere Einzelheiten der Erfindung werden anhand eines schematisch dargestellten Ausführungsbeispiels näher erläutert.

Hierbei zeigen
- Fig. 1: eine schematische Darstellung der erfindungsgemäßen Kupplung im entkuppelten Zustand;
- Fig. 2: eine schematische Darstellung der erfindungsgemäßen Kupplung im halb gekuppelten Zustand;
- Fig. 3: eine schematische Darstellung der erfindungsgemäßen Kupplung im gekuppelten Zustand.

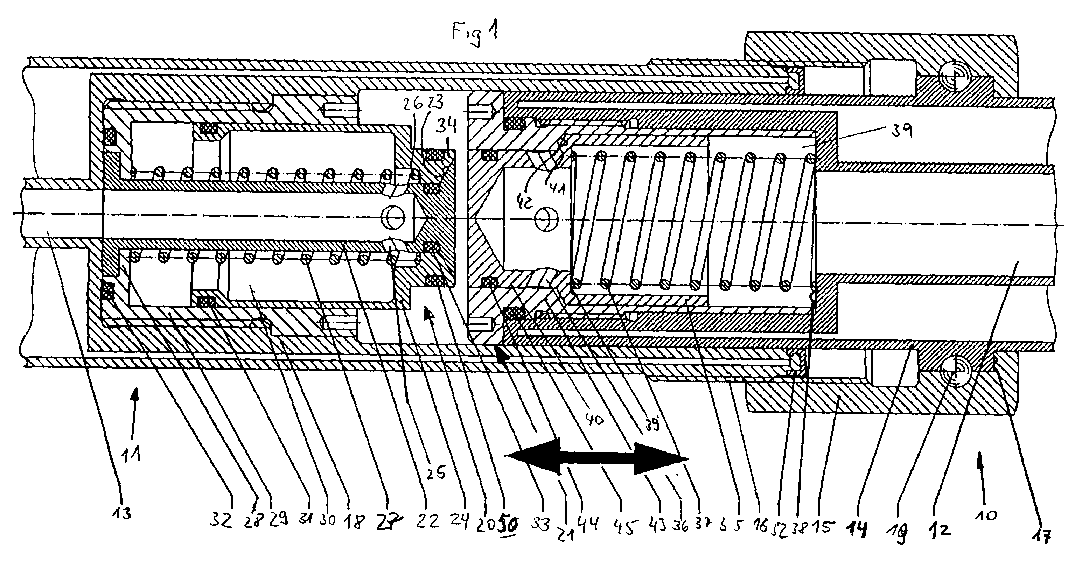

Die erfindungsgemäße Kupplung nach den Figuren 1 bis 3 umfaßt ein eindringendes Kupplungsstück 10 und ein aufnehmendes Kupplungsstück 11 zum Verbinden zweier Leitungsenden 12, 13. Die Verbindung wird durch Zusammenstecken und Verschrauben der Kupplungsstücke 10, 11 hergestellt. Hierzu ist auf dem vakuumisolierten Kupplungsgehäuse 14 des Kupplungsstückes 10 eine an der Schulter 17 anliegende Überwurfmutter 15 und auf dem ebenfalls vakuumisolierten Kupplungsgehäuse 18 des Kupplungsstückes 11 ein Gewinde 16 angeordnet. Über die Verschraubung wird die benötigte mechanische Kraft, die die beiden Kupplungsstücke 10, 11 zusammendrückt und damit den Weg für das tiefkalte Medium frei gibt, aufgebracht. Eine leichtgängige Verschraubung wird durch Anordnung von Kugeln 19 zwischen dem Kupplungsgehäuse 14 und der Überwurfmutter 15 im Bereich unterhalb der Schulter 17 erreicht, auf welchen die Überwurfmutter 15 abrollt. Andere Arten der Kraftaufbringung, wie z.B. Hebel, Exzenter oder mit fremdmediumbetriebene Zylinder sind möglich.

Jedes Kupplungsgehäuse 14, 18 bildet einen sich nahezu über die gesamte Länge des eindringenden und aufnehmenden Kupplungsstückes 10 bzw. 11 erstreckende, isolierende Vakuumringkammer, die sich im zusammengeschobenen Zustand der Kupplungsstücke 10, 11 überlappen und ein Vereisen der Kupplung beim Durchfluß von tiefkalten Medien in den Leitungsenden 12, 13 verhindern. An jedem Leitungsende 12, 13 sind die sich gegenüberliegenden Absperrventile 20, 21 angeordnet. Das Absperrventil 20 des Kupplungsstückes 11 besteht aus einem das Leitungsende 13 verschließenden topfförmigen Ventilkopf 22, der stationär an der Stirnseite des Leitungsendes 12 angeordnet ist und eine sich zu seiner Bodenfläche hin vergrößernde und unter einem Winkel verlaufende Anlagefläche 23 aufweist, an der das federbelastete Ventilgehäuse 24 im entkuppelten Zustand der Kupplung anliegt. Der ausgehöhlte und daher nur eine geringe Masse aufweisende Ventilkopf 22 ist bevorzugt aus Kunststoff. Die Durchströmöffnungen 25 zweigen radial von dem Ventilkopf 22 ab. Das Ventilgehäuse 24 weist eine Schulter 26 auf, an der die Feder 27 anliegt. Die den Ventilkopf 22 umgebende Feder 27 stellt das Ventilgehäuse 24 an die Fläche 23. Die Feder 27 stützt sich mit ihrem anderen Ende an dem Flansch 28 der Ventilhaltebuchse 29 ab. Die Ventilhaltebuchse 29 nimmt das Ventilgehäuse 24 auf. Sie bilden einen Raum 30, in den die Durchströmöffnungen 25 des Ventilkopfes 22 münden und in dem die Feder 27 innerhalb des tiefkalten Mediums angeordnet ist. Über Ringdichtungen 31, 33 zwischen Ventilbuchse 29 und Ventilgehäuse 24 und zwischen Ventilgehäuse 24 und Ventilkopf 22 sowie über eine Dichtung 32, z.B. zwischen Ventilbuchse 29 und Leitungsende 32, ist der Raum 30 abgedichtet. Das Ventilgehäuse 24 weist eine abgestufte Kontur auf. Der durchmesserkleinere Zapfen 34 ist dem Absperrventil 21 des eindringenden Kupplungsstückes 10 gegenüberliegend angeordnet und mit einer Radialdichtung 50 versehen. Die Funktion dieser Radialdichtung 50 wird weiter unten beschrieben.

Ventilbuchse 29 und Ventilgehäuse 24 mit Ventilkopf 22 verschließen das Leitungsende 13 über den abgedichteten Raum 30, in den im entkuppelten Zustand der Kupplung (Fig. 1), die radial von dem Leitungsende 12 abzweigenden Durchströmöffnungen 25 münden. Über die Dichtungen 31, 32, 33 wird der Austritt des tiefkalten Mediums im entkuppelten Zustand aus dem Raum 30 verhindert. Das Absperrventil 21 des Kupplungsstückes 10 besteht ebenfalls aus einem ausgehöhlten, topfförmigen Ventilkopf 35, der federbelastet ist und in dem die Durchströmöffnungen 36 für das tiefkalte Medium radial abgehen. Die Feder 37 stützt sich an der Schulter 38 eines am Leitungsende 12 vorgesehenen Raumes 39 mit vergrößertem Durchmesser ab, in den das Leitungsende 12 mündet. Der Ventilkopf 35 weist eine abgestufte Kontur auf. Der durchmesserkleinere Zapfen 40 ist dem Absperrventil 20 gegenüberliegend angeordnet. An der innerhalb des Ventilkopfes 35 ausgebildeten Schulter 39 liegt die Feder 37 an, über die der Ventilkopf 35 mit der außenliegenden Schulter 41 an eine entsprechende Schulter 42 des Ventilgehäuses 43 druckbelastet anliegt. Das Ventilgehäuse 43 umschließt formschlüssig so den Zapfen 40, daß die Durchströmöffnungen 36 verschlossen sind und das Ventilgehäuse gleitend in axialer Richtung bewegbar ist.

Der aus Kunststoff gefertigte Ventilkopf 35 ist im entkuppelten Zustand, im wesentlichen an der Stirnseite, bündig mit dem sie umgebenden Ventilgehäuse 43. Zwischen Ventilkopf 35 und Ventilgehäuse 43 ist im Bereich des Zapfens 40 eine Radialdichtung 44 vorgesehen, die Ventilkopf 35 und Ventilgehäuse 43 gegeneinander abdichtet. Weiterhin ist das Ventilgehäuse 43 über Radialdichtung 45 gegenüber dem Kupplungsgehäuse bzw. dem mit dem Leitungsende 12 verbundenen und Ventilgehäuse 43 mit Ventilsitz 35 aufnehmenden Raum 39 abgedichtet.

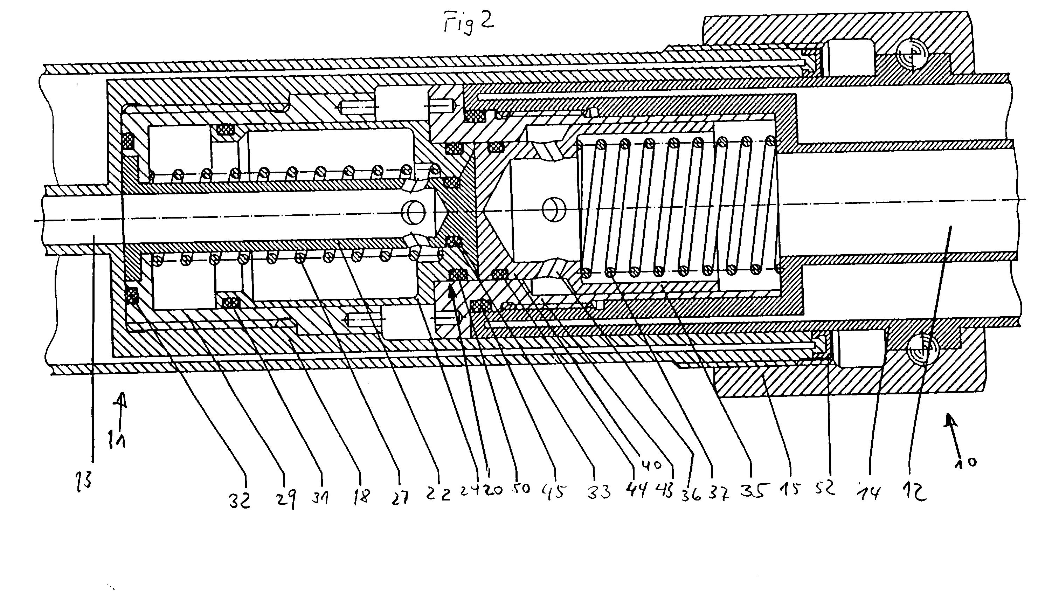

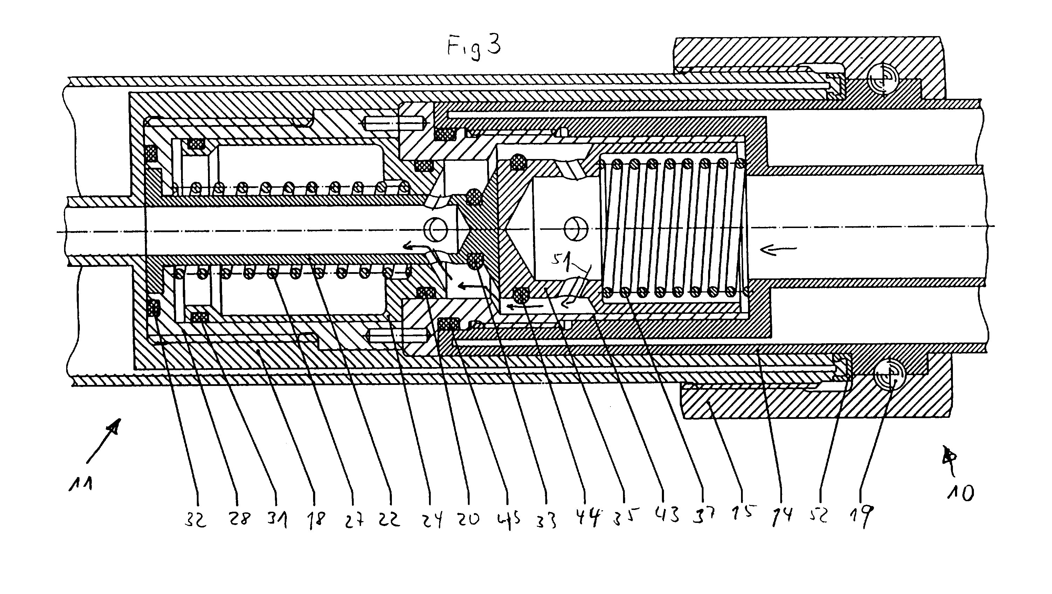

Die Leitungsenden 12, 13 werden durch Zusammenstecken des eindringenden Kupplungsstückes in das aufnehmende Kupplungstück 11 verbunden. Beim Schrauben der Überwurfmutter 15 auf das Gewinde 16, wird das eindringende Kupplungsstück 10 in Richtung des Absperrventiles 20 des aufnehmenden Kupplungsstückes 11 bewegt, bis die Stirnfläche von Ventilkopf 35 auf der Stirnfläche des Ventilkopfes 22 des Absperrventiles 20 liegt. Der Ventilkopf 35 des eindringenden Kupplungstückes 10 verharrt in der Bewegung bei geschlossenen Durchströmöffnungen 36, 25 der beiden Absperrventile 20, 21. Das Ventilgehäuse 43 des eindringenden Kupplungsstückes 10 bewegt sich gegen die Kraft der Feder 37 weiter, bis es den Zapfen 34 des Ventilgehäuses 24 des aufnehmenden Kupplungsstückes 11 umschließt. Über die Radialdichtung 50 liegt das Ventilgehäuse 43 dicht an dem Zapfen 34 an. Durch den Formschluß zwischen den Ventilköpfen und den Ventilgehäusen entsteht ein nahezu von Umgebungsluft (Umgebungsmedium) freier Einschluß bzw. Abschluß der noch geschlossenen Durchströmöffnungen 25, 36 der Absperrventile 20, 21 aufgrund einer Volumenverdrängung (Fig. 2). Das Ventilgehäuse 43 liegt hierbei über Dichtungen 44, 50 dichtend an beiden Zapfen 34, 40 der Ventilköpfe an. Die Durchströmöffnung 36 des eindringenden Kupplungsteiles 10 ist geöffnet, das tiefkalte Medium kann aber nicht zum Leitungsende des aufnehmenden Kupplungsstückes 11 strömen, da der Zapfen 40 dicht am Ventilgehäuse 43 anliegt. Erst wenn die Kupplungsstücke 10, 11 weiter angenähert werden, öffnen sich die Absperrventile 20, 21. Das Ventilgehäuse 43 verschiebt das Ventilgehäuse 24 entgegen der Kraft der Feder 27 innerhalb der Ventilbuchse 29 bis entsprechend der Darstellung in Figur 3 das Ventilgehäuse 24 unterhalb von den Durchströmöffnungen 25 angeordnet ist und die Durchströmöffnungen 25 freigibt. Dabei wird der Kontakt zwischen der Dichtung 33 und dem Ventilgehäuse 24 gelöst. Gleichzeitig entfernt sich durch die Bewegung des Ventilgehäuses 43 in Richtung des Leitungsendes 13 das Ventilgehäuse 43 von den Durchströmöffnungen 36 des Ventilkopfes 35, wobei sich ein Durchströmweg entsprechend den Pfeilen 51 zwischen den Kupplungsstücken ausbildet. Die 3ewegung der Überwurfmutter 15 wird durch die als Anlage wirkende Stirnseite des Kupplungsgehäuses 18 des aufnehmenden Kupplungsstückes 11 begrenzt. Die als Anlage ausgebildete Stirnseite ist mit einer Schonkante 52 aus elastischem Material versehen.

Durch die Anordnung der Absperrventile 20, 21 am jeweiligen Leitungsende 12, 13 der Kupplungsstücke 10, 11, werden die Leitungen durch die das tiefkalte Medium fließt, im entkuppelten Zustand verschloßen (Fig. 1). Da beim Kuppeln der Kupplungshälften 10, 11 nahezu kein Umgebungsmedium in die Umfüllvorrichtung eindringen kann, da die Absperrventile 20, 21 erst öffnen, wenn die Kupplungshälften 10, 11 beim Kuppeln die Umgebungsluft weitestgehend verdrängt haben und die Absperrventile 20, 21 luftdicht abgeschlossen sind, kann die Kupplung im kalten Zustand gelöst werden. Ein Inertisieren/ Spülen kann vorteilhaft entfallen.

## Patentansprüche

1. Kupplung für tiefkalte verflüssigte Medien, welche zwei Leitungsenden und ein aufnehmendes und ein eindringendes Kupplungsstück zum Verbinden der zwei Leitungsenden aufweist, wobei die Kupplungsstücke jeweils ein an den äußeren Leitungsenden angeordnetes Absperrventil aufweisen, durch die Durchströmöffnungen verschließbar sind, und wobei beim Kontakt der Absperrventile (20, 21) Mittel beide Durchströmöffnungen (25, 36) vor deren Öffnung gegen Umgebungsluft abdichten, und wobei jedes der Kupplungsstücke (10, 11) ein rohrförmiges, vakuumisoliertes Kupplungsgehäuse (14, 18) aufweist, und wobei sich die Kupplungsgehäuse (14, 18) im zusammengeschobenen Zustand der Kupplungsstücke (10, 11) überlappen,
dadurch gekennzeichnet,
daß die Mittel aus die Ventilköpfe (22, 35) der Absperrventile (20, 21) umgebenden Ventilgehäusen (24, 43) bestehen, welche vorzugsweise nach Kontakt der Ventilköpfe (22, 35) dichtend zur Anlage kommen, und daß bei weiterer Annäherung der beiden Kupplungsstücke (10, 11) die Durchströmöffnungen (25, 36) öffnen,
und daß die Ventilköpfe (22, 35) mit Radialdichtungen (33, 44) versehen sind, die ein Hindurchströmen der Medien aus den Ventilgehäusen (24, 43) verhindern und die an geeigneten Dichtflächen der Ventilgehäuse (24, 43) anliegen.

2. Kupplung nach Anspruch 1,
dadurch gekennzeichnet,
daß die Ventilgehäuse (24, 43) überlappend zur Anlage kommen und mindestens ein Ventilgehäuse (24) mit einer Dichtung (50) im Anlagebereich der beiden Ventilgehäuse (24, 43) versehen ist.

3. Kupplung nach einem der Ansprüche 1 oder 2,
dadurch gekennzeichnet,
daß die Ventilköpfe (22, 35) die gegenüberliegenden Leitungsenden (12, 13) stirnseitig abschließen und die Durchströmöffnungen (25, 36) radial von den Ventilköpfen (22, 35) abgehen.

4. Kupplung nach einem der Ansprüche 1 bis 3,
dadurch gekennzeichnet,
daß der Ventilkopf (35) und das Ventilgehäuse (43) des eindringenden Kupplungsstückes (10) bei der Annäherung an den Ventilkopf (22) und das Ventilgehäuse (24) des aufnehmenden Kupplungsstückes (11) nahezu vollständig die Umgebungsluft verdrängt und das Abdichten der Durchströmöffnungen (25, 36) nahezu ohne Einschluß von Umgebungsluft erfolgt.

5. Kupplung nach einem der Ansprüche 1 bis 4,
dadurch gekennzeichnet,
daß der Ventilkopf (35) des eindringenden Kupplungsstückes (10) topfförmig ausgebildet ist und eine Schulter (39) aufweist, auf der sich eine Feder (37) abstützt, die den Ventilkopf (35) an eine Schulter (42) des Ventilgehäuses (43) anlegt.

6. Kupplung nach einem der Ansprüche 1 bis 5,
dadurch gekennzeichnet,
daß der Ventilkopf (22) des aufnehmenden Kupplungsstückes (11) topfförmig ausgebildet ist und an seinem Kopfende eine Anlagefläche (23) aufweist, an welche eine den Ventilkopf (22) umgebende Feder (27) das Ventilgehäuse (24) angelegt.

7. Kupplung nach einem der Ansprüche 1 bis 6,
dadurch gekennzeichnet,
daß die Ventilköpfe (22, 35) über ihre offenen Seiten mit den Leitungsenden (12, 13) verbunden sind.

8. Kupplung nach einem der Ansprüche 1 bis 7,
dadurch gekennzeichnet,
daß die Federn (27, 37) im Medium angeordnet sind.

9. Kupplung nach einem der Ansprüche 1 bis 8,
dadurch gekennzeichnet,
daß die axiale Verschiebung des eindringenden Kupplungsstückes (10) über ein an einer Schulter (17) anliegendes Verbindungselement (15) erfolgt, welches mit einem am aufnehmenden Kupplungsstück (11) vorgesehenen Gegenstück (16) in Eingriff steht.

10. Kupplung nach einem der Ansprüche 1 bis 9,
dadurch gekennzeichnet,
daß das Verbindungselement (15) eine Überwurfmutter ist, die über Kugeln (19) mit dem Kupplungsgehäuse (14) des eindringenden Kupplungsstückes (10) verbunden ist.

11. Kupplung nach einem der Ansprüche 1 bis 10,
dadurch gekennzeichnet,
daß das Kupplungsgehäuse (18) des aufnehmenden Kupplungsstückes (11) an seiner zum Verbindungselement (15) gerichteten Seite mit einer Schonkante (52) versehen ist.

12. Kupplung nach einem der Ansprüche 1 bis 11,
dadurch gekennzeichnet,
daß die Ventilköpfe (22, 35) aus Kunststoff sind.

## Claims

1. Coupling for low-temperature liquidified media, which has two conduit ends and a receiving coupling piece and a penetrating coupling piece for connecting the two conduit ends, the coupling pieces having a shut-off arranged at each of the outer conduit ends, throughflow orifices being capable of being closed by means of said shut-off valves, and, when the shut-off valves (20, 21) are in contact, means sealing off both throughflow orifices (25, 36) against ambient air prior to their opening, and each of the coupling pieces (10, 11) having a tubular vacuum-insulated coupling housing (40, 18), and the coupling housings (14, 18) overlapping one another when the coupling pieces (10, 11) are in the pushed-together state, characterized in that the means consist of valve housings (24, 43) which surround the valve heads (22, 35) of the shut-off valves (20, 21) and which come to bear sealingly preferably after the contact of the valve heads (22, 35) and, when the two coupling pieces (20, 11) come nearer to one another, open the throughflow orifices (25, 36), and in that the valve heads (22, 35) are provided with radial gaskets (33, 44) which prevent the media from flowing through out of the vale housings (24, 43) and which bear on suitable sealing surfaces of the valve housings (24, 43).

2. Coupling according to Claim 1, characterized in that the valve housings (24, 43) come to bear in an overlapping manner and at least one valve housing (24) is provided with a gasket (50) in the bearing region of the two valve housings (24, 43).

3. Coupling according to one of Claims 1 or 2, characterized in that the valve heads (22, 35) close off on the end face the conduit ends (12, 13) located opposite one another and the throughflow orifices (25, 36) emanate radially from the valve heads (22, 35).

4. Coupling to one of Claims 1 to 3, characterized in that the valve head (35) and the valve housing (43) of the penetrating coupling piece (10), when approaching the valve head (22) and the valve housing (24) of the receiving coupling piece (11), displace the ambient air virtually completely, and the throughflow orifices (25, 36) are sealed off, virtually without any ambient air being included.

5. Coupling to one of Claims 1 to 4, characterized in that the valve head (35) of the penetrating coupling piece (10) is of bowl-shaped design and has a shoulder (39), on which is supported a spring (37) which brings the valve head (35) to bear on a shoulder (42) of the valve housing (43).

6. Coupling according to one of Claims 1 to 5, characterized in that the valve head (22) of the receiving coupling piece (11) is of bowl-shaped design and has at its head end a bearing surface (23), on which a spring (27) surrounding the valve head (22) brings the valve housing (24) to bear.

7. Coupling according to one of Claims 1 to 6, characterized in that the valve heads (22, 35) are connected via their open sides to the conduit ends (12, 13).

8. Coupling according to one of Claims 1 to 7, characterized in that the springs (27, 37) are arranged in the medium.

9. Coupling according to one of Claims 1 to 8, characterized in that the axial displacement of the penetrating coupling piece (10) takes place via a connecting element (15) which bears on a shoulder (17) and which is in engagement with a counterpiece (16) provided on the receiving coupling piece (11).

10. Coupling according to one of Claims 1 to 9, characterized in that the connecting element (15) is a union nut which is connected via balls (19) to the coupling housing (14) of the penetrating coupling piece (10).

11. Coupling according to one of Claims 1 to 10, characterized in that the coupling housing (18) of the receiving coupling piece (11) is provided, on its side directed towards the connecting element (15), with a protective edge (52).

12. Coupling according to one of Claims 1 to 11, characterized in that the valve heads (22, 35) are produced from plastic.

## Revendications

1. Accouplement pour des fluides liquéfiés à très basse température, comportant deux extrémités de conduites et un raccord mâle et un raccord femelle pour relier les deux extrémités de conduite, dans lequel
• les raccords ont chacun une soupape d'arrêt à l'extrémité extérieure de la conduite pour fermer des passages,
• au contact des soupapes d'arrêt (20, 21), des moyens assurent l'étanchéité des passages (25, 36) vis-à-vis de l'air ambiant avant leur ouverture, chacun des raccords (10, 11) comportant un corps (14, 18) tubulaire, isolé par le vide, et les corps de raccords (14, 18) chevauchant les raccords (10, 11) lorsqu'ils sont engagés l'un sur l'autre,
caractérisé en ce que
• les moyens sont formés par des corps de soupapes (24, 43) entourant les têtes (22, 35) des soupapes d'arrêt (20, 21), ces corps venant en appui étanche, de préférence après le contact des têtes de soupapes (22, 35),
• lorsque se poursuit le rapprochement des deux raccords (10, 11), les passages (25, 36) s'ouvrent, et
• les têtes de soupapes (22, 35) sont munies de joints radiaux (33, 44) évitant l'introduction de fluide extérieurs aux corps de soupapes (24, 43), et s'appuyant contre des surfaces d'étanchéité appropriées des corps de soupape (24, 43).

2. Accouplement selon la revendication 1,
caractérisé en ce que
les corps de soupapes (24, 43) viennent en appui en se chevauchant et au moins un corps de soupape (24) est muni d'un joint (50) dans la zone d'appui des deux corps de soupapes (24, 43).

3. Accouplement selon l'une quelconque des revendications 1 ou 2,
caractérisé en ce que
les têtes de soupapes (22, 35) ferment les faces frontales des extrémités de conduites (12, 13) en regard et les passages (25, 36) partent radialement des têtes de soupapes (22, 35).

4. Accouplement selon l'une quelconque des revendications 1 à 3,
caractérisé en ce que
la tête de soupape (35) et le corps de soupape (43) du raccord mâle (10), lorsqu'ils se rapprochent de la tête de soupape (22) et du corps de soupape (24) du raccord femelle (11), refoulent pratiquement complètement l'air ambiant et assurent l'étanchéité des passages (25, 36) pratiquement sans emprisonner l'air ambiant.

5. Accouplement selon l'une quelconque des revendications 1 à 4,
caractérisé en ce que
la tête de soupape (35) du raccord mâle (10) est en forme de pot et comporte un épaulement (39') contre lequel s'appuie un ressort (37) qui pousse la tête de soupape (35) contre un épaulement (42) du corps de soupape (43).

6. Accouplement selon l'une quelconque des revendications 1 à 5,
caractérisé en ce que
la tête de soupape (22) du raccord femelle (11) est en forme de pot et son extrémité comporte une surface d'appui (23) contre laquelle vient un ressort (27) entourant la tête (22) et s'appliquant contre le corps de soupape (24).

7. Accouplement selon l'une quelconque des revendications 1 à 6,
caractérisé en ce que
les têtes de soupapes (22, 35) sont reliées aux extrémités de conduites (12, 13) par leur côté ouvert.

8. Accouplement selon l'une quelconque des revendications 1 à 7,
caractérisé en ce que
les ressorts (27, 37) sont situés dans le fluide.

9. Accouplement selon l'une quelconque des revendications 1 à 8,
caractérisé en ce que
le coulissement axial du raccord mâle (10) se fait par un élément de liaison (15) appliqué contre un épaulement (17), et qui est en prise avec une pièce correspondante (16) prévue sur le raccord femelle (11).

10. Accouplement selon l'une quelconque des revendications 1 à 9,
caractérisé en ce que
l'élément de liaison (15) est un écrou chapeau relié par des billes (19) au corps (14) du raccord mâle (10).

11. Accouplement selon l'une quelconque des revendications 1 à 10,
caractérisé en ce que
le corps (18) du raccord femelle (11) est muni d'une arête protectrice (52) au niveau de son côté tourné vers l'élément de liaison (15).

12. Accouplement selon l'une quelconque des revendications 1 à 11,
caractérisé en ce que
les têtes de soupapes (22, 35) sont en matière plastique.
